# EUROPEAN PATENT APPLICATION

(11) **EP 0 818 134 A2**
(43) Date of publication of application: **14.01.1998**
(21) Application number: 97610029.7
(22) Date of filing: 08.07.1997
(51) Int. Cl.: A01B 73/00, A01B 59/042

(54) **A towed agricultural implement and a method changing an agricultural implement over from an operating position to a transport position and back**

(30) Priority: 09.07.1996 DK 76696
(71) Applicant: JF-FABRIKEN - J. FREUDENDAHL A/S, DK-6400 Sonderborg (DK)
(72) Inventor: Freudendahl, Jan, 6400 Sonderborg (DK)
(74) Representative: Raffnsöe, Knud Rosenstand

(57) **Abstract**

By the method an agricultural implement (1) towed by a tractor (15) and comprising an elongate carrier frame (2, 5, 6) for suspension of a tool (3), two operating wheels (9, 10) mounted at each end of the carrier frame (2, 5, 6) for carrying the agricultural implement (1) during operation, whereby the operating wheels (9, 10) and the tool (3) can be raised and lowered relative to each other, two transport wheels (11, 12) mounted to be raised and lowered at one end of the carrier frame (2, 5, 6) for carrying the agricultural implement (1) during transport in a direction substantially perpendicular to the travelling direction during operation, as well as a drawbar (8) mounted on the carrier frame (2, 5, 6) at the same end as the transport wheels (11, 12) and being pivotal by means of a power means between an operating position and a transport position and connected with the lift of the tractor, is changed over by the following steps in succession:
- the transport wheels (11, 12) and the operating wheels (9, 10) are lowered, such that the tool (3) and the operating wheel (9) closest to the transport wheels (11, 12) are free of the ground,
- the drawbar (8) and the carrier frame (2, 5, 6) are swung by means of the power means to their mutual transport position and locked to each other in this position, and
- the lift of the tractor is raised, whereby the operating wheel (10) farthest away from the transport wheels (11, 12) is raised.

## Description

The present invention relates to a towed agricultural implement, for instance a mower, comprising an elongate carrier frame for suspension of a tool, for instance a harvesting header, two operating wheels mounted at each end of the carrier frame for carrying the agricultural implement during operation, the carrier frame being adapted, during operation, to be advanced transversely to its longitudinal direction and the operating wheels and the tool can be raised and lowered relative to each other, two transport wheels mounted to be raised and lowered at one end of the carrier frame for carrying the agricultural implement during transport in a direction substantially perpendicular to the travelling direction during operation, as well as a drawbar mounted on the carrier frame at the same end as the transport wheels and being pivotal by means of a power means between an operating position and a transport position.

The invention also relates to a method for changing over an agricultural implement, for instance a mower, towed by a tractor, from a working position to a transport position and back, said implement comprising an elongate carrier frame for suspension of a tool, for instance a harvesting header, two operating wheels mounted at each end of the carrier frame for carrying the agricultural implement during operation, the carrier frame being adapted, during operation, to be advanced transversely to its longitudinal direction and the operating wheels and the tool can be raised and lowered relative to each other, two transport wheels mounted to be raised and lowered at one end of the carrier frame for carrying the agricultural implement during transport in a direction substantially perpendicular to the travelling direction during operation, as well as a drawbar mounted on the carrier frame at the same end as the transport wheels and being pivotal by means of a power means between an operating position and a transport position and connected with the lift of the tractor.

GB-A-2.232.055 discloses an agricultural implement of the above type in the form of a mower. In this known mower the operating wheels can be raised and lowered relative to the carrier frame. When the mower is to be changed over from operating position to transport position, both the transport wheels and the operating wheels are lowered, the mower resting on all four wheels and the harvesting header being lifted free of the field. Then drawbar and carrier frame are swung relative to each other by means of the power means, whereby the drawbar which is connected with a tractor remains substantially in place, whereas the carrier frame and consequently the remaining part of the mower are swung around. A drawback thereof is that at least some of the wheels during the changing over are advanced substantially sideways over the field, the surface of the field being damaged thereby.

The object of the present invention is to avoid or minimize said drawback of the prior art.

The object is met by means of an agricultural implement mentioned by way of introduction, which implement is characteristic in that the transport wheels have a lower position defined by a stop, in which position at least one transport wheel is positioned at a lower level than the operating wheels, when these are in a position lowered relative to the tool, the latter position being determined in relation to the carrier frame.

The object is further met by means of a method of the type mentioned by way of introduction, said method being characteristic by the following steps in succession:
- the transport wheels are lowered and the operating wheels are lowered, or the tool is raised such that the tool and the operating wheel closest to the transport wheels are free of the ground,
- the drawbar and the carrier frame are swung by means of the power means to their mutual transport position and locked to each other in this position, and
- the lift of the tractor is raised, whereby the operating wheel farthest away from the transport wheels is raised.

By an agricultural implement or a method according to the invention is obtained that a towed agricultural implement may be changed over from a working position to a transport position or back substantially without the field being harmed, on account of the fact that the implement is only carried by some of its wheels, which during the changing over roll and are not dragged sideways over the field.

If the drawbar is mounted on the carrier frame substantially vertically above to the rotational axes of the transport wheels, both transport wheels may be in contact with the field during the changing over, whereby they will at any time be directed tangentially to their travelling path without skidding.

If the drawbar is hinged to the transport frame at a certain distance from the rotational axis/axes of the transport wheels it is advantageous if the connecting point of the drawbar with the carrier frame is displaced forwards or backwards relative to the travelling direction of the implement during operation, whereby the connecting point will be substantially in line with one of the transport wheels. This transport wheel then has to be raised during at least the initial part of the changing over in order not to be dragged sideways across the field.

An embodiment of the method according to the invention at the changing over of an agricultural implement, in which the drawbar is mounted at the front of the carrier frame, is thus characteristic in
- that the transport wheel, which relative to the travelling direction during operation is positioned rearmost, by said lowering is lowered to a level which is lower than that of the other of said transport wheels,
- that the drawbar and the carrier frame during the swinging towards their mutual transport position in the beginning are swung until the centre of gravity of the agricultural implement is close to a line (A-D) between the connection point of the drawbar on the tractor and said rearmost transport wheel,
- that the lift of the tractor is lowered before or during the continued relative swinging of the drawbar and the carrier frame, the agricultural implement, when its centre of gravity passes said line (A-D), tipping over such, that it is also supported by the transport wheel which relative to the travelling direction during operation is the foremost one. Hereby is obtained that an agricultural implement, in which the drawbar is mounted at the front of the carrier frame, which is in many ways an advantageous embodiment, can be changed over from the operating position to transport position without damaging the field.

The invention will now be explained in detail in the following by means of an example of an embodiment with reference to the schematic drawing, in which
Fig. 1 shows a towed mower in operating position, seen from above,
Fig. 2 the mower with lowered wheels ready for changing over,
Fig. 3 the mower in the position shown in Fig. 2, seen from behind,
Figs 4 - 7 various steps of the changing over from operating position to transport position, and
Fig. 8 the mower in transport position.

The drawing shows a mower 1 with a carrier frame 2, in which the operating aggregate 3 of the mower is suspended, said aggregate comprising in a manner known per se cutter discs or drums, conditioning and throw rotor as well as windrow shields 4 for guiding thrown out crop. The carrier frame 2 is provided with two forwards protruding brackets 5, 6, of which the bracket 5 at the front end through a hinge 7 with a vertical axis is connected with a drawbar 8.

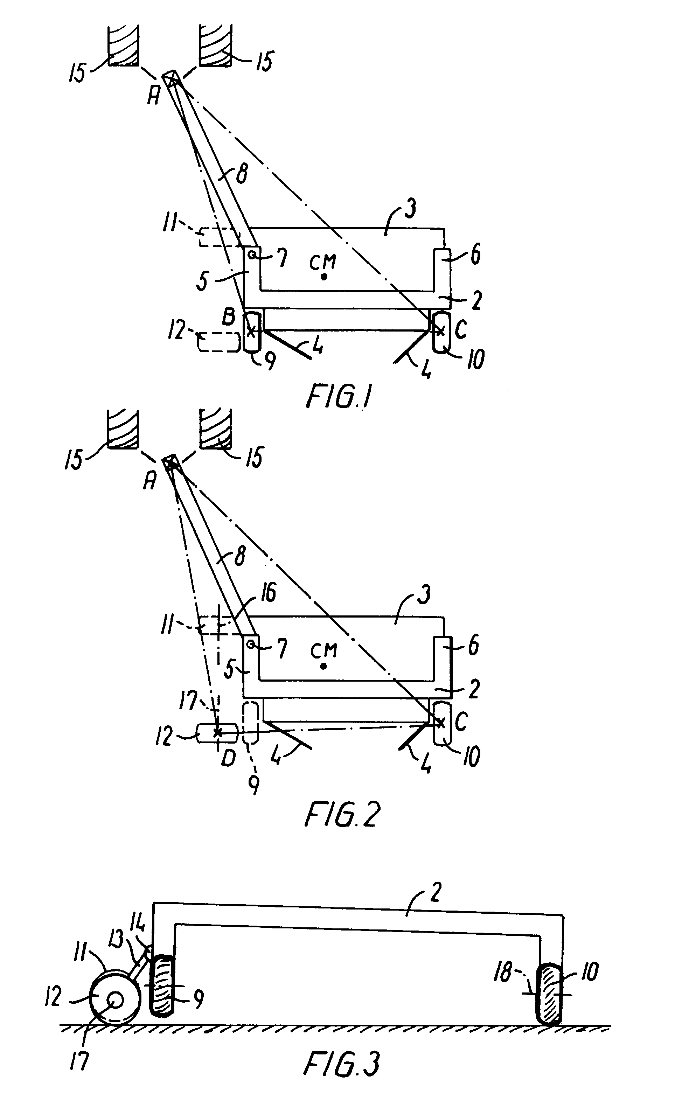

The mower 1 is provided with two operating wheels 9, 10, which may be fastened to be raised and lowered on the carrier frame 2 to make it possible by means of the operating wheels to lift the carrier frame 2 and consequently its operating aggregate 3. Alternatively, the operating wheels 9, 10 may be fixedly mounted on the carrier frame 2, in which case the operating aggregate has to be suspended in the carrier frame 2 in such a way that it is possible to lift it comparatively high relative thereto. At the end of the carrier frame 2, on which the drawbar 8 is mounted, the carrier frame 2 carries two transport wheels 11, 12, which can be raised and lowered, as they are mounted on each their arm 13 which may pivot around an axis (Fig. 3).

The drawbar 8 is at its front end in a manner known per se connected with the rearmost lift of a tractor, of which only the rear wheels 15 have been indicated.

The mower has a centre of gravity CM.

In the position shown in Fig. 1 (the operating position) the mower 1 is carried by the tractor and the operating wheels 9, 10 in the points A, B, and C, respectively, and it should be noted that the centre of gravity CM lies within the triangle defined by the points A, B, and C.

The wheels which carry and do not carry, respectively, have been illustrated by a solid line and a dot-and-dash line.

In the position shown in Figs 2 and 3 the operating wheels 9, 10 are lowered and/or the operating aggregate 3 raised, and the transport wheels 11, 12 are lowered. The lowered wheels are in this connection lowered to a stop (not shown) in such a way that they are each lowered to their intended level, as will be explained in the following.

As appears from for instance Figs 1 and 2 the hinge 7 is arranged at a horizontal distance from the rotational axes 16, 17 of the transport wheels 11, 12. Furthermore, the hinge 7 is placed at the front of the mower 1 substantially in line with the transport wheel 11. If the mower 1 is rotated about the axis of the hinge 7, the transport wheel 11 and the operating wheel 9 may be moved substantially sideways without any possibility of rolling. When the wheels are lowered, the transport wheel 12 is therefore lowered to a lower level than the operating wheels 9, 10, as shown in Fig. 3. Thereby the operating wheel 9 is lifted from the ground and may by the pivoting of the mower 1 about the axis of the hinge 7 be moved sideways without any harm being done to the surface of the field. Furthermore, the transport wheel 12 is lowered to a lower level than the transport wheel 11.

This difference in level between the two transport wheels may be established in several ways depending on the concrete constructional design and dimensioning of the mower 1 and the tractor, with which the mower is connected. If the distance between the transport wheels 11, 12 is sufficiently big, and the distance from the transport wheel 12 to the front end of the drawbar 8 sufficiently small, it may be possible to lift the transport wheel 11 by raising the lift of the tractor and consequently the end of the drawbar 8. Another possibility is to design the transport wheels and their suspension (the arms 13 and the shaft 14) such that the transport wheels 11, 12 are raised and lowered as a unity, the transport wheel 11 being placed higher up than the transport wheel 12 as shown in Fig. 3, when they are in their lowered position, and the mower 1 is kept in its normal operating position relative to horizontal. A third possibility is to design the transport wheels 11, 12 and their suspension such that the two wheels are raised and lowered mutually independently.

It should be noted that the operating aggregate 3 is not shown in Fig. 3.

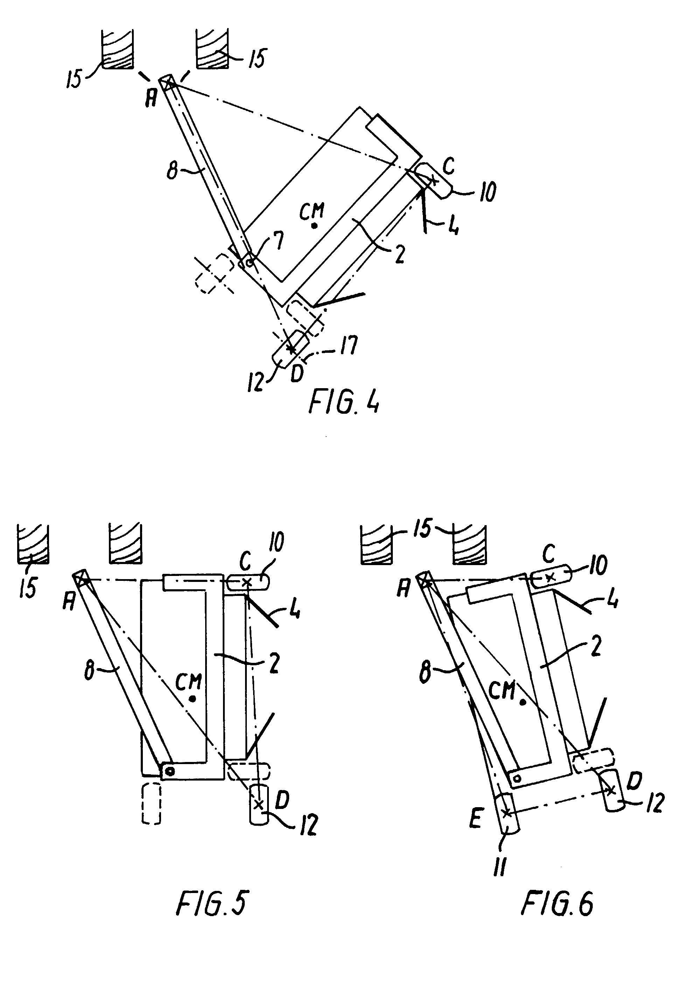

From the position shown in Fig. 2 the mower 1 is swung relative to the drawbar 8 by means of a power means (not shown) like for instance a hydraulic cylinder. As the drawbar at one end is held by the tractor, and it is possible for the operating wheel 10 and the transport wheel 12 to roll, the mower 1 will pivot substantially about the axis of the hinge 7, whereas the drawbar 8 keeps its position relative to the field. As will be seen from Fig. 4, the wheels 10, 12 are not directed tangentially relative to their paths (circular paths with centre in the hinge 7). As long as the angles between the rotational axes 17, 18 of the wheels and the direction from the wheel in question to the hinge 7 is small, the skidding of the wheels during the changing over movement will, however, be so limited, that the field will not suffer significantly.

In Fig. 4 the mower is like in Fig. 2 carried in the points A, D, and C, and it should be noted, that the centre of gravity CM lies within the triangle defined by these three points.

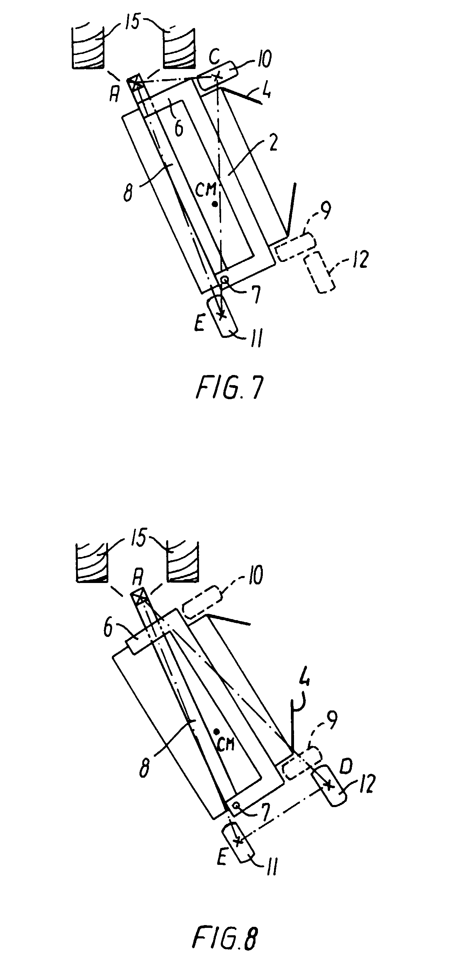

In the situation shown in Fig. 5 the carrier frame 2 is swung closer to the drawbar 8, and, consequently, the centre of gravity has moved close to the line between point A and point D, which means that the mower is substantially carried in these two points, whereas the point C has been relieved. By continued swinging of the carrier frame 2 and the drawbar 8 towards another, the power requirement will increase substantially on account of the further relieving of the point C. Therefore, the lift of the tractor is lowered before or during the continued swinging to the situation shown in Fig. 6, in which the mower is carried in the points A, B, C, and D. It should be noted that the centre of gravity CM has exactly passed the line A-D, and as the centre of gravity CM always lies in front of the line C-E, the transport wheel 12 will be lifted corresponding to a relieving of the point D at further lowering of the lift of the tractor and consequently the point A. This is the situation in Fig. 7, in which the drawbar 8 and the carrier frame 2 are swung further towards another. It should be noted that the drawbar passes under the bracket 6.

At the time during the course of the changing over, at which the transport wheel 11 is loaded in the point E, the point of rotation for the movement of the carrier frame 2 relative to the field move from the axis of the hinge 7 to the point E on account of the resistance of the wheel 11 towards moving sideways. Due to the fact that the angle between the drawbar 8 and a line from E to the hinge 7 is small at this time, the distance between the points A and E will not increase significantly by the further swinging of the frame 2 towards the drawbar 8, and the operating wheel 10 will correspondingly not move significantly sideways.

In the situation shown in Fig. 8 (the transport position) the drawbar 8 is advanced further below the bracket 6, where it is locked by means of members not shown. The end of the drawbar 8 has been raised by means of the lift of the tractor, and consequently, the operating wheel 10 has been raised, and the mower rests on both transport wheels 11, 12. The operating means 9, 10 may, in case they can be raised and lowered, be raised to increase the free height of the mower 1 in the transport position.

When changing over from the transport position to the operating position the same method steps are used in reverse order.

## Claims

1. A towed agricultural implement (1), for instance a mower, comprising an elongate carrier frame (2, 5, 6) for suspension of a tool (3), for instance a harvesting header, two operating wheels (9, 10) mounted at each end of the carrier frame (2, 5, 6) for carrying the agricultural implement (1) during operation, the carrier frame (2, 5, 6) being adapted, during operation, to be advanced transversely to its longitudinal direction and the operating wheels (9, 10) and the tool (3) can be raised and lowered relative to each other, two transport wheels (11, 12) mounted to be raised and lowered at one end of the carrier frame (2, 5, 6) for carrying the agricultural implement (1) during transport in a direction substantially perpendicular to the travelling direction during operation, as well as a drawbar (8) mounted on the carrier frame (2, 5, 6) at the same end as the transport wheels (11, 12) and being pivotal by means of a power means between an operating position and a transport position, **characterized** in that the transport wheels (11, 12) have a lower position defined by a stop, in which position at least one transport wheel (12) is positioned at a lower level than the operating wheels (9, 10), when these are in a position lowered relative to the tool (3), the latter position being determined in relation to the carrier frame (2, 5, 6).

2. A towed agricultural implement according to claim 1, **characterized** in that the operating wheels (9, 10) may be raised and lowered relative to the carrier frame (2, 5, 6) and that their said position lowered relative to the tool (3) is determined in relation to the carrier frame (2, 5, 6) by means of stops.

3. A towed agricultural implement according to claim 1 or 2, **characterized** in that the drawbar (8) is mounted at the front or at the back of the carrier frame (2, 5, 6) and that the agricultural implement (1) is designed such that a transport wheel (12), which relative to the travelling direction during operation is positioned opposite the mounting point (7) of the drawbar (8) on the carrier frame (2, 5, 6), in said lower position is positioned at a lower level than the other of said transport wheels (11).

4. A method for changing over an agricultural implement (1), for instance a mower, towed by a tractor, from a working position to a transport position and back, said implement comprising an elongate carrier frame (2, 5, 6) for suspension of a tool (3), for instance a harvesting header, two operating wheels (9, 10) mounted at each end of the carrier frame (2, 5, 6) for carrying the agricultural implement (1) during operation, the carrier frame (2, 5, 6) being adapted, during operation, to be advanced transversely to its longitudinal direction and the operating wheels (9, 10) and the tool (3) can be raised and lowered relative to each other, two transport wheels (11, 12) mounted to be raised and lowered at one end of the carrier frame (2, 5, 6) for carrying the agricultural implement (1) during transport in a direction substantially perpendicular to the travelling direction during operation, as well as a drawbar (8) mounted on the carrier frame (2, 5, 6) at the same end as the transport wheels (11, 12) and being pivotal by means of a power means between an operating position and a transport position and connected with the lift of the tractor, **characterized** in the following steps in succession:
- the transport wheels (11, 12) are lowered and the operating wheels (9, 10) are lowered, or the tool (3) is raised such that the tool (3) and the operating wheel (9) closest to the transport wheels (11, 12) are free of the ground,
- the drawbar (8) and the carrier frame (2, 5, 6) are swung by means of the power means to their mutual transport position and locked to each other in this position, and
- the lift of the tractor is raised, whereby the operating wheel (10) farthest away from the transport wheels (11, 12) is raised.

5. A method according to claim 4 for the changing over of an agricultural implement (1), in which the drawbar (8) is mounted at the front of the carrier frame (2, 5, 6), **characterized** in
- that the transport wheel (12) which relative to the travelling direction during operation is positioned rearmost, by said lowering is lowered to a level which is lower than that of the other of said transport wheels (11),
- that the drawbar (8) and the carrier frame (2, 5, 6) during the swinging towards their mutual transport position in the beginning are swung until the centre of gravity (CM) of the agricultural implement (1) is close to a line (A-D) between the connection point of the drawbar (8) on the tractor and said rearmost transport wheel (12),
- that the lift of the tractor is lowered before or during the continued relative swinging of the drawbar (8) and the carrier frame (2, 5, 6), the agricultural implement (1), when its centre of gravity (CM) passes said line (A-D), tipping over such, that it is also supported by the transport wheel (11) which relative to the travelling direction during operation is the foremost one.
